# EUROPÄISCHE PATENTANMELDUNG

(11) **EP 1 234 701 A1**
(43) Veröffentlichungstag der Anmeldung: **28.08.2002**
(21) Anmeldenummer: 02100187.0
(22) Anmeldetag: 26.02.2002
(51) Int. Cl.: B60J 5/04, H01R 13/24

(54) **Türmodul für Kraftfahrzeuge**

(30) Priorität: 27.02.2001 DE 10109452
(71) Anmelder: Philips Corporate Intellectual Property GmbH, 52066 Aachen (DE); Koninklijke Philips Electronics N.V., 5621 BA Eindhoven (NL)
(72) Erfinder: Nagel, Thomas c/o Philips Corporate Intellectual, 52066 Aachen (DE); Bunnemann, Martin c/o Philips Corporate, 52066 Aachen (DE)
(74) Vertreter: Volmer, Georg, Dipl.-Ing.

(57) **Zusammenfassung**

Die Erfindung bezieht sich auf ein Türmodul (1) für Kraftfahrzeuge und die Herstellung eines solchen Moduls. Die Erfindung zeichnet sich dadurch aus, dass das Türmodul (1) zur Befestigung an einer Tür (2) eines Kraftfahrzeugs vorgesehen ist, dass das Türmodul (1) als Trägerelement einen Kunststoffträger (1a) aufweist und dass das Türmodul (1) verschiedene aus Kunststoff aufgespritzte oder durch aufgespritzten Kunststoff mit dem Kunststoffträger (1a) verbundene Funktionselemente und/oder Verstärkungen (11) aufweist.

## Beschreibung

Die vorliegende Erfindung betrifft ein Türmodul für Kraftfahrzeugs.

Die Türen moderner Kraftfahrzeugs enthalten immer mehr Funktionen. So sind z.B. Bedienelemente für elektrische Fensterheber, eine elektrische Spiegelverstellung oder auch eine elektrische Sitzverstellung vorgesehen. Dazu kommen noch Komponenten wie Lautsprecher, Ablagen und Fächer sowie Halterungen für eine Zentralverriegelung. Diese Funktionsbauteile müssen zum Teil mit elektrischem Strom versorgt werden, bzw. weisen Anschlusskabel zum Austausch elektrischer Steuersignale auf. Deshalb müssen auch Kabel in der Tür untergerbacht werden. Um die Kosten bei der Herstellung so gering wie möglich zu halten, sind die Kraftfahrzeughersteller dazu übergegangen die Tür in mehrere Komponenten aufzuteilen. Hauptbestandteil ist natürlich die Autotür selbst, welche meist aus Stahlblech, Aluminium oder Kunststoff ist, sowie einem Trägermodul, welches an der Innenseite der Autotür befestigt ist und die Bedienelemente und Funktionsbauteile trägt. Dieses Trägermodul wird gegenüber dem Fahrgastraum eines Kraftfahrzeugs mit einer Innenverkleidung abgedeckt.

Die Trägermodule werden heute fast immer von Zulieferern hergestellt und komplett an das Montageband eines Autoherstellers geliefert. Durch den Preisdruck auf die Zulieferer sind diese gezwungen nach möglichst preisgünstigen Lösungen mit einem hohen Automatisierungsgrad bei der Herstellung zu suchen.

In DE 198 33 185 A1 wird der Aufbau eines solchen Trägermoduls beschrieben. Das Trägermodul ist dabei einstückig ausgsbildet und weist als Hauptkomponente eine selbsttragende Trägerplatte aus Metall auf. Auf diese Trägerplatte werden Funktionselemente aus Kunststoff aufgespritzt, welche in einem Arbeitsschritt mit der Trägerplatte verbunden werden.

Aufgabe der vorliegenden Erfindung ist es, die Herstellung eines Türmoduls für Kraftfahrzeuge weiter zu vereinfachen und die Integration weiterer Funktionen zu ermöglichen.

Die Aufgabe wird erfindungsgemäß durch gelöst, dass das Türmodul zur Befestigung an einer Tür eines Kraftfahrzeugs vorgesehen ist, dass das Türmodul als Trägerelement einen Kunststoffträger aufweist und dass das Türmodul verschiedene aus Kunststoff aufgespritzte oder durch aufgespritzten Kunststoff mit dem Kunststoffträger verbundene Funktionselemente und/oder Verstärkungen aufweist.

Der Kunststoffträger bietet gegenüber einem Metallträger den großen Vorteil, dass er einfacher und schneller sowie kostengünstiger zu produzieren ist. Des weiteren ist ein Kunststoffträger wesentlich leichter, was das Gesamtgewicht des Kraftfahrzeugs senkt. Außerdem sind Kunststoffträger in allen möglichen Formen problemlos herzustellen. Zusammen mit den aufgespritzten Verstärkungen bieten Kunststoffträger auch eine vergleichbare Stabilität und Festigkeit wie Metallträger. Da die Verstärkungen zusammen mit den Funktionselementen auf den Kunststoffträger in einem Aribeitsschritt befestigt werden, stellen die Verstärkungen keinen Nachteil gegenüber einem Metallträger dar, der auf solche Verstärkungen verzichten kann, da kein zusätzlicher Aribeitsschritt gegenüber der Ausführung mit einem Metallträger anfällt.

Die Ausgsstaltung nach Anspruch 2 stellt eine besonders günstige Herstellungsmethode von Kunststoffbauteilen dar. Die Form eines Kunststoffträgers ist somit flexibel zu gestalten, außerdem ist eine Massenproduktion möglich. Durch die Wannenform wird außerdem die Stabilität und Verwindungssteifigkeit des gesamten Türmoduls erhöht.

Mit der Ausgestaltung nach Anspruch 3 wird der Herstellungsprozess des gesamten Türmoduls vereinfacht. Dichtungen, Pufferelemente und selbst Verschlüsse werden durch Aufspritzen von Kunststoff auf den Kunststoffträger aufgebracht. Dies ist bei einem Metallträger nur mit der aufwendigeren sogenannten Outsert-Technik (Metall-Kunststoffverbindung) möglich. Das Aufspritzen von Kunststoff auf Kunststoffträger ist dagegen wesentlich unproblematischer in der Handhabung

Die Ausgestaltungen nach den Ansprüchen 4 und 5 erhöhen die Steifigkeit und Stabilität eines Türmoduls. Da das Türmodul gegenüber der Autotür und der Innenverkleidung gegen Feuchtigkeit abgedichtet sein muss, ist in dem Bereich, wo das Türmodul auf die Autotür bzw. die Innenverkleidung trifft neben einer guten Dichtung auch eine hohe Stabilität erforderlich. Ansonsten kann sich das Türmodul verwinden und die Dichtung gibt einen Spalt frei, durch den Feuchtigkeit eindringen kann. Aus diesem Grund ist in den betroffenen Bereichen eine Rinne im Türmodul vorgesehen, welche einen Metalldraht aufnimmt. Dieser Metalldraht stellt eine hohe Stabilität sicher und verhindert das Verwinden des Türmoduls in diesen Bereichen und verhindert zusammen mit den Dichtungen das Eindringen von Feuchtigkeit in das Türmodul.

Die Ausgestaltungen nach den Ansprüchen 6 bis 8 beziehen sich auf ein Verfahren zur Herstellung eines erfindungsgemäßen Türmoduls, die Ansprüche 9 und 10 auf eine Autotür bzw. ein Kraftfahrzeug mit einem erfindungsgämäßen Türmodul.

Ein Ausführungsbeispiel der vorliegenden Erfindung wird nun an Hand von Figuren näher beschrieben und erläutert. Es zeigen:
Figur 1 eine Seitenansicht eines erfindungsgemäßen Türmoduls in einer Autotür,
Figur 2 zeigt als ein exemplarisches Funktionselement eine Kabeltülle aus aufgespritztem Kunststoff,
Figur 3 zeigt eine Lautsprecherbefestigung, und
Figur 4 zeigt eine Motorbefestigung.

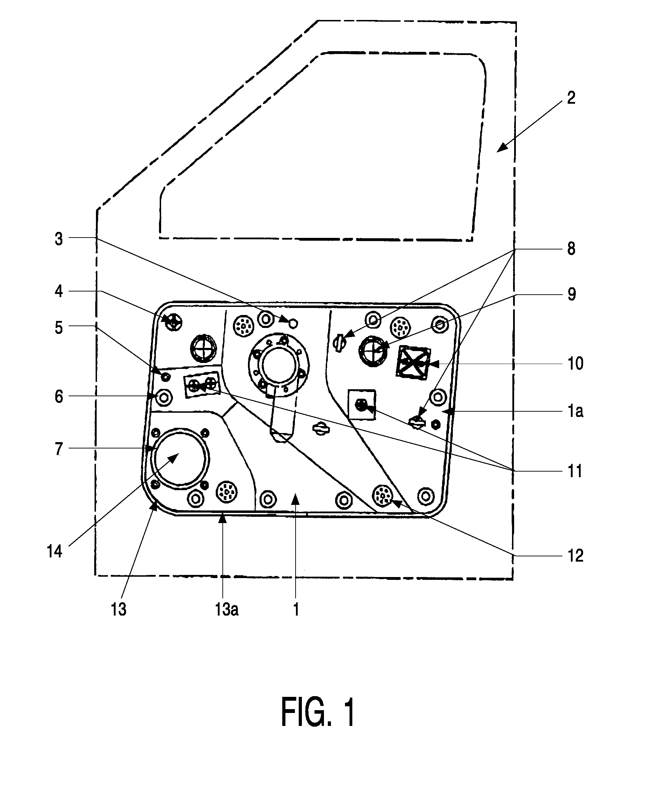

Eine in Figur 1 gezeigte Autotür 2 beinhaltet das erfindungsgsmäße Türmodul 1. Das Türmodul 1 ist an der Innenseite der Autotür 2 montiert. Gegenüber dem Fahrgastraum wird das Türmodul 1 mit einer hier nicht gezeigten Innenverkleidung verkleidet. Bei der Herstellung des Türmoduls 1 werden mehrere Bauteile miteinander verbunden. So besteht das Türmodul 1 aus einem Grundträger 1a, welcher ein beschnittenes, tiefgezogenes oder gestanztes Kunststoffteil ist. Auf diesen Kunststoffträger 1a werden verschiedene Funktionselemente und Verstärkungen aufgebracht. Dies geschieht vorzugsweise durch das Aufspritzen von Kunststoff. So weist der Kunststoffträger im oberen Bereich Kabelhalter 8 und Tüllen 9 auf. Die Kabelhalter 8 sind hier als Kabelclips ausgsführt. So können die Kabel zur Stromversorgung und Steuerung elektrischer Bauteile wie elektrische Fensterheber einfach in die Kabelhalter 8 eingesteckt oder geclipst werden.

Um den Abstand zwischen Tür 2 und Türmodul 1 oder zwischen Türmodul 1 und Innenverkleidung festzulegen, sind flexible Puffer 3 und Zentrierbolzen 5 an den Kunststoffträger 1a angespritzt. Als Verstärkungselemente sind Blecheinlagen 12 und Türgriffbefestigungen 11 mit blechverstärkter Einlage sowie blechverstärkte Anschraubpunkte 6 vorgesehen. Da das Türmodul mit der Innenverkleidung der Tür 2 reversibel verbunden werden muss, um etwaige Wartungsarbeiten an den elektrischen Bauteilen im Innern des Türmoduls 1 ausführen zu können, ist die Innenverkleidung mit dem Türmodul 1 mittels Drehverschlüssen 4 verbunden. Auch ein solcher Drehverschluss 4 wird aus Kunststoff an das Türmodul angespritzt. Zu den elektrischen Bauteilen, die im Türmodul 1 untergebracht sind, gehören z.B. elektrische Fensterheber oder die Steuerung der Zentralverriegelung Für die Zentralverriegelung sind ebenfalls Halterungen 10 aus Kunststoff an das Türmodul 1 angespritzt.

Elektrische Bauteile müssen vor Feuchtigkeit geschützt werden, was eine Abdichtung zwischen Türmodul 1 und Autotür 2 und zwischen Türmodul 1 und Innenverkleidung bedingt. Aus diesem Grund weist das Türmodul an seinen Kanten Dichtungen 7 auf. Um eine zuverlässige Abdichtung gerade der umlaufenden Kante des Türmoduls 1 zu erreichen, weist das Türmodul 1 an der umlaufenden Kante eine Rinne 13a auf, welche einen Draht 13 aufnimmt. Dieser Draht 13 stabilisiert den Kunststoffträger 1a im kritischen Randbereich und stellt so zusammen mit der Dichtung 7 sicher, dass keine Feuchtigkeit in das Türmodul 1 eindringen kann. Wenn das Türmodul große Öffnungen 14 z.B. für voluminöse Lautsprecher aufweist, so können auch diese Öffnungen 14 zusätzlich zu einer Dichtung 7 eine drahtseilverstärkte Rinne aufweisen.

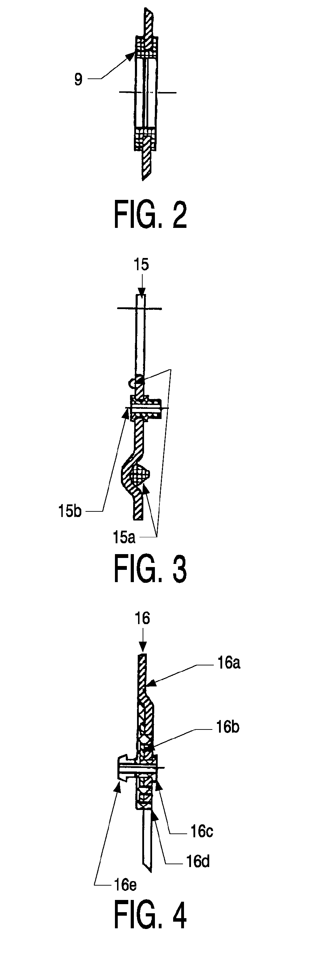

In den Figuren 2 - 4 sind einzelne angespritzte Funktionselemente vergrößert dargestellt. So besteht in Figur 2 eine Kabeltülle 9 aus Weichgummi, welcher auf den Kunststoffträger 1a aufgespritzt wird. Auf die gleiche Art und Weise lassen sich auch andere Montageöffnungen herstellen. Eine Lautsprecherbefestigung 15 nach Figur 3 kann zusätzlich noch Blechkomponenten 15b zur Verstärkung aufweisen. Zusätzlich ist eine Dichtungsschnur 15a aus Weichgummi angespitzt, welche nach Montage eines Lautsprechers diesen gegenüber dem Türmodul 1 abdichtet. Für die Befestigung von Elektromotoren sind spezielle Motorbefestigungen 16 vorgesehen. Ein Beispiel ist in Figur 4 gezeigt. Eine solche Motorbefestigung 16 besteht aus einem Kunststoffteil 16a und einer Blechverstärkung 16b als Grundelemente. Des weiteren ist die Blechverstärkung 16b an der einen Seite mit Kunststoff 16c umspritzt und bildet damit den Motorträger. Auch hier ist zu Abdichtungszwecken eine umlaufende Weichgummischnur 16d angespritzt, so dass keine Feuchtigkeit ins Innere des Türmoduls 1 gelangt. Treibt der Motor eine Seiltrommel an, so ist für diese eine Halterung 16e vorgesehen, welche an die Blecheinlageverstärkung 16b angespritzt ist. Diese Halterung 16e ist als Clip ausgeformt, so dass ein Gehäuse mit einer Seiltrommel durch einfaches Stecken und Clipsen montiert werden kann.

Die Kunststoffbauteile und Verstärkungselemente werden zusammen mit dem Kunststoffträger 1a in einem Arbeitsgang unlösbar verbunden, wodurch ein Türmodul kostengünstig und schnell herzustellen ist und trotzdem durch die Verstärkungselemente genügend Stabilität aufweist.

## Patentansprüche

1. Türmodul (1) für Kraftfahrzeuge, welches zur Befestigung an einer Tür (2) eines Kraftfahrzeugs vorgesehen ist, welches als Trägerelement einen Kunststoffträger (1a) aufweist und welches verschiedene aus Kunststoff aufgespritzte oder durch aufgespritzten Kunststoff mit dem Kunststoffträger (1a) verbundene Funktionselemente und/oder Verstärkungen (11) aufweist.

2. Türmodul (1) nach Anspruch 1,
**dadurch gekennzeichnet,**
**dass** der Kunststoffträger (1a) wannenförmig ausgebildet ist und ein tiefgezogenes oder gestanztes Kunststoffbauteil ist.

3. Türmodul (1) nach Anspruch 1,
**dadurch gekennzeichnet,**
**dass** die Funktionselemente Pufferelemente (3), Dichtungen (7), Verschlüsse (4) oder Befestigungen (8, 10, 11, 12, 6) sind, welche durch Aufspritzen von Kunststoff auf den Kunststoffträger (1a) herstellbar sind

4. Türmodul (1) nach Anspruch 1,
**dadurch gekennzeichnet,**
**dass** in oder an dem Kunststoffträger (1a) Metalldrähte (13) zur Stabilisierung befestigt sind.

5. Türmodul (1) nach Anspruch 4,
**dadurch gekennzeichnet,**
**dass** das Türmodul (1) eine umlaufende Rinne (13a) ausweist, welche dazu vorgesehen ist, einen Draht (13) aufzunehmen, welcher das Türmodul (1) gegenüber einer Tür eines Kraftfahrzeugs oder einer Innenverkleidung abdichtet.

6. Verfahren zur Herstellung eines Türmoduls (1) für Transportmittel, bei dem ein Kunststoffträger (1a) mit Funktionselementen und Verstärkungen (11) in einem Arbeitsschritt unlösbar verbunden wird.

7. Verfahren each Anspruch 6,
**dadurch gekennzeichnet,**
**dass** der Kunststoffträger (1a) mit den Verstärkungselementen (11) punktuell durch das Aufspritzen von Kunststoff verbunden wird.

8. Verfahren nach Anspruch 6,
**dadurch gekennzeichnet,**
**dass** auf den Kunststoffträger (1a) Funktionselemente oder Verstärkungselemente (11) aufgespritzt werden.

9. Tür eines Kraftfahrzeugs mit einem Türmodul (1), welches an der Tür (2) des Kraftfahrzeugs befestigt ist, welches als Trägsrelement einen Kunststoffträger (1a) aufweist und welches verschiedene aus Kunststoff aufgespritzte oder durch aufgespritzten Kunststoff mit dem Kunststoffträger (1a) verbundene Funktionselemente und/bder Verstärkungen (11) aufweist.

10. Kraftfahrzeug mit einem Türmodul (1), welches zur Befestigung an einer Tür (2) des Kraftfahrzeugs vorgesehen ist, welches als Trägerelement einen Kunststoffträger (1a) aufweist und welches verschiedene aus Kunststoff aufgespritzte oder durch aufgespritzten Kunststoff mit dem Kunststoffträger (1a) verbundene Funktionselemente und/oder Verstärkungen (11) aufweist.
